Europäisches Patentamt

(19) European Patent Office

Office européen des brevets

(11) Publication number: **0 249 589**
**A1**

(12) # EUROPEAN PATENT APPLICATION

(21) Application number: 87850186.5

(22) Date of filing: 10.06.87

(51) Int. Cl.³: **B 63 B 35/30**
**B 09 B 1/00**

(30) Priority: 11.06.86 SE 8602599

(43) Date of publication of application:
16.12.87 Bulletin 87/51

(84) Designated Contracting States:
BE DE GB NL

(71) Applicant: Stena AB
Box 31300
S-400 32 GÖTEBORG(SE)

(72) Inventor: Rawall,Sven-Erik
Nilssonsberg 32
S-411 43 Göteborg(SE)

(74) Representative: Roth, Ernst Adolf Michael et al,
GÖTEBORGS PATENTBYRA AB Box 5005
S-402 21 Göteborg(SE)

(54) A method and a device for disposal of liquid at sea.

(57) The invention refers to a method for disposal of liquid, particularly treated wastewater, at sea with use of ship, whereby the liquid is pumped via at least one pipeline (3) from storing spaces in the ship and is discharged at a level (d) which may be lower than the metalimnion (s), i.e. below about 200 m.

The invention also refers to a device for performing the method and this incorporates at least one flexible pipeline (3), which with one of its ends is connectable to storing spaces on the ship (1), that a pump is provided to pump the liquid from said storing spaces through the pipeline and that the pipeline has an adjustable length, and with its free end (4) is arranged at a depth (d), which may bigger than the level of the metalimnion (s) of the water.

FIG 1

A METHOD AND A DEVICE FOR DISPOSAL OF LIQUID AT SEA

Background of the invention

The present invention refers to a method for disposal of liquid, particularly treated wastewater, at sea with use of ship, and a device for performing the method.

When treating lavatory waste and industrial wastewater sewage sludge is obtained as a final product. Today different methods are used for disposing with this sludge.

The sludge may e.g. be dried and treated in different manners in order to be used as fertilizing material or filling material at construction work, etcetera.
The sludge may be disposed at sea by either being pumped out through pipelines or tunnels or by being dumped in the surface layer from barges or ships.
Furthermore incineration of the sludge may be used.

At earlier methods for sludge disposal at sea by means of pipelines or tunnels the sludge is allowed to discharge via stationary, local discharge plants in the coastal water. Such disposal is today used very extensively in several countries. The sludge hereby consists of about 5 - 10 % of dry substance and the remainder water, whereby the sludge has mechanical properties resembling to those of fresh water.

This near-coast discharge gives big problems as big volumes of non-wanted matters, i.a. nitrates, phosphates and heavy metals, etcetera are spread within a limited area, which means over-fertilization of the water, contamination of fishing-waters and pollution of shores.

At dumping in the water surface layer from barges or ships a series of negative consequences are experienced, due to the fact that the dumping is made in a zone in which the most active life exists and which is therefore particularly vulnerable from biological aspects.

The quantities of tracers, toxic substances and other pollutants in the sludge thus will be taken up by the organic life existing in this zone. The big oxygen requirement of the sludge results in an oxygen depletion in the sea water within the area in question, which results further risks for negative influence upon the ecosystem. Due to the dumping in the surface layer the sludge will remain over long periods of time in this area as the rate of sedimentaion is very low.

The extensive dumping of this kind, which today is used in some countries furthermore often is made at rather small depths (some ten meters), which means that a bottom, which otherwise should have rather a rich organic life can be considered as biologically dead.

The purpose and most essential features of the invention

The purpose of the present invention is to provide a method for disposal of liquid, particularly treated wastewater, at sea with use of ship, whereby the above mentioned drawbacks have been eliminated, at the same time as the disposal can be effected in a simple and economically satisfactory manner, and this has been obtained with a method having the features defined in the accompanying claim 1.

The invention also incorporates a device for performing the method according to the invention and this device is characterized by the features defined in claim 5.

Description of the drawing

The invention hereinafter will be further described with reference to an embodiment shown in the accompanying drawing.

Figure 1 shows in side elevation a portion of a ship during deposition of liquid in accordance with the method according to the invention, and
Figure 2 is a corresponding view from above.

Description of embodiment

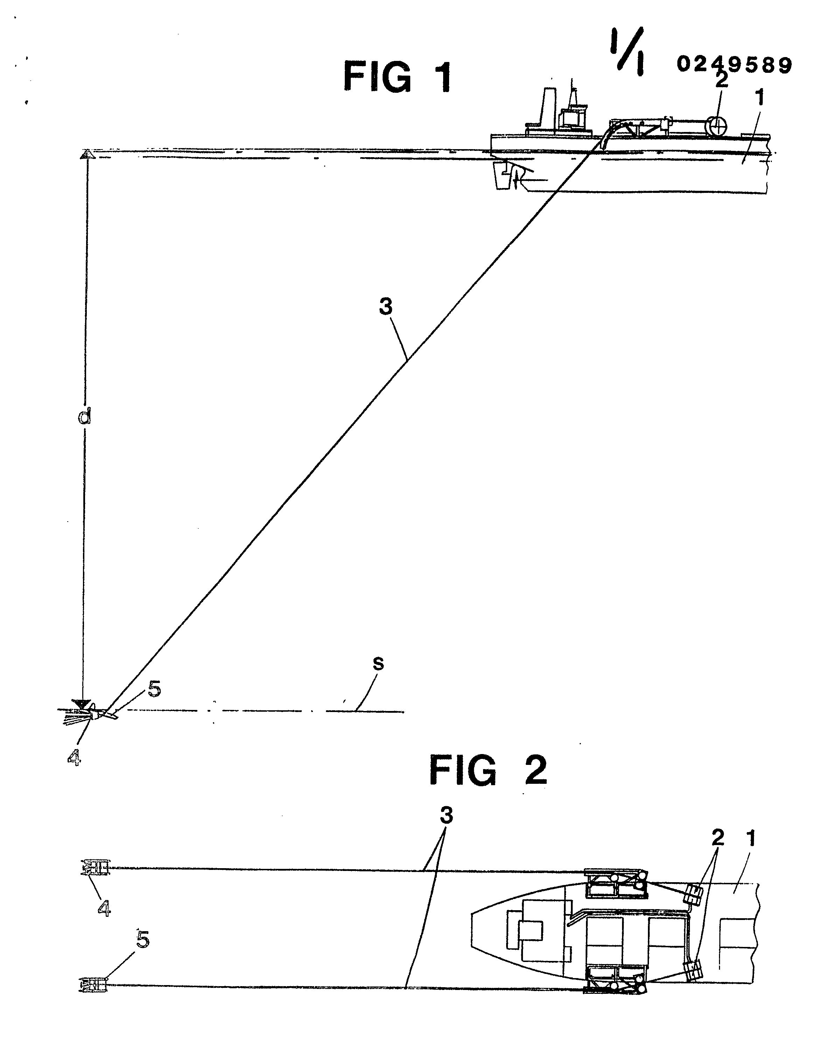

In Fig. 1 is shown a portion of a ship 1, which can be of any arbitrary type, but which is equipped with storing spaces for the liquid to be deposited. The ship is equipped with winches 2 of a type similar to those used e.g. for cable-laying. On these winches are arranged flexible pipelines 3, which may be stowed on the winches when not used and be rolled out when to be used. Every single pipeline 3 has one of its ends attachable to the storing spaces of the ship, and it is possible to pump liquid via a not shown pump from the storing spaces through the pipeline.

The pipeline is of big length and its free end in active position is lowered to a depth d, which may be bigger than the level where the so called thermocline or metalimnion or halocline, which is caused by the big density gradient occuring between the water above and below this level, and which in turn depends on the temperature differences and/or salt content differences. This level is schematically intimated at s in Fig. 1.

This thermocline acts as an efficient barrier against vertical transports and the temperature depending thermocline lays at a depth of about 200 m.

In order to ascertain that the mouth 4 of the pipeline is on a sufficient distance below the metalimnion s and for preventing that the long pipe track will begin to swing or that vibrations occur near the end 4 of the pipeline there are provided means 5 for stabilization and maintaing the level. These means e.g. may be paravanes.

In the pipeline is provided at least one (not shown) device for admixing the surrounding sea water into the liquid flow in the inner of the tube. This can be effected e.g. with aid of an ejector, which by actuation of the liquid pumped in the pipe, sucks salt water through a valve, and thereby at one hand increases the dilution of the liquid pumped, and on the other hand increases the density of the pumped liquid, the main portion of which consists of fresh water. The bigger density furthermore means a lower deposition level.

The pipeline is preferably a flexible pipe, of a type developed i.a. for the offshore industry and which consists of a steel reinforced rubber tube, which has a very big tensile strenght and a low bending resistance, whereby the pipe has a very high pliability and elasticity.

By the possibility of depositing the liquid e.g. purified wastewater, which is given with the method and the device according to the invention, the impurities of the sludge will not come into contact with the vulnerable surface regions, as at surface dumping and at discharge through pipelines.
Due to the disposal at big depth the impurities will load a considerably less vulnerable zone, where it is normally a not very active life, and the barring effect of the thermocline furthermore effeciently will prevent the sludge from moving upwards to regions, which are more vulnerable biologically.
A big dilution of the disposal volume is furthermore obtained, at the same time as use of mouth nozzles for spreading the discharge further improve the dilution.
As the disposal can be effected while the ship is running the disposal is further improved.

The method also implies a big flexibility in the choice of deposition locality in contrast to stationary plants of the type pipelines or barges with a limited service range.

The invention is not limited to the device shown in the figures or to the method described in connection thereto but modifications are possible within the scope of the following claims.

## CLAIMS

1.  A method for disposal of liquid, particularly treated wastewater, at sea with use of ship, c h a r a c t e r i z e d   t h e r e i n, that the liquid is pumped through at least one pipeline (3) from storing spaces in the ship and is discharged at a level (d), which may lay below the metalimnion (s).

2. A method as claimed in claim 1, c h a r a c t e r i z e d   t h e r e i n, that the pumping out of the liquid is made while the ship travels through the water.

3. A method as claimed in anyone of claims 1 or 2, c h a r a c t e r i z e d   i n, providing the lower end (4) of the pipeline (3) with means (5) for stabilization and maintaining the depth.

4. A method as claimed in anyone of the preceding claim, c h a r a c t e r i z e d   t h e r e i n, that the liquid pumped through the pipeline is spread by means of discharge members when discharged from the free end (4) of the pipeline.

5.  A device for disposal of liquid, particularly treated wastewater, at sea with use of ship, in accordance with the method according to claim 1, c h a r a c t e r i z e d   t h e r e i n, that it incorporates at least one flexible pipeline (3), which with one of its ends is connectable to storing spaces on the ship (1), that a pump is provided to pump the liquid from said storing spaces through the pipeline and that the pipeline has an adjustable length.

6. A device as claimed in claim 5, c h a r a c t e r i z e d   t h e r e i n, that the pipeline (3) with its free end (4) is arranged at a level (d) lower than the level of the metalimnion (s) of the water.

7. A device as claimed in claim 5 or 6, characterized therein, that the pipeline is flexibly attached to the ship.

8. A device as claimed in claim 5 or 6, characterized therein, that the pipeline in itself is elastic.

9. A device as claimed in anyone of claims 5 to 8, characterized therein, that the pipeline (3) at its lower end is equipped with means (5) for stabilization and maintaing the depth of the pipe end.

10. A device as claimed in claim 9, characterized therein, that the means for stabilization and maintaining the depth are paravanes (5).

11. A device as claimed in anyone of claims 5 to 10, characterized therein, that the free end (4) of the pipeline (3) is provided with members for spreading the discharged liquid.

12. A device as claimed in anyone of claims 5 to 11, characterized therein, that in the pipeline is arranged at least one device for admixing sea water into the liquid pumped through the pipe.

FIG 1

1/1 0249589

FIG 2

European Patent Office

EUROPEAN SEARCH REPORT

**0249589**
Application number

EP 87 85 0186

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| E | FR-A-2 592 626 (THE MAERSK CO. LTD) * Whole document * | 1,2,5, 6,7,8 | B 63 B 35/30 B 09 B 1/00 |
| | --- | | |
| X | PATENT ABSTRACTS OF JAPAN, vol. 8, no. 47 (M-280)[1484], 2nd March 1984; & JP-A-58 202 182 (KOUBE DOCK KOGYO K.K.) 25-11-1983 | 1,2,5, 6,7,8 | |
| | --- | | |
| X | US-A-3 595 161 (WEBB) * Column 3, lines 25-56; figures 1-5 * | 1,5 | |
| | --- | | |
| A | GB-A-2 098 139 (AANNEMERS COMBINATIE ZINKWERKEN) * Abstract; page 2, lines 14-34; figures 1-7 * | 1,3 | TECHNICAL FIELDS SEARCHED (Int Cl 4) |
| | --- | | B 63 B |
| A | US-A-4 352 590 (PARKER) * Column 6, line 58 - column 7, line 45; figures 1,2 * | 1,2,3, 4,12 | B 09 B 1/00 E 02 D 15/10 |
| | ----- | | |

The present search report has been drawn up for all claims

| Place of search | Date of completion of the search | Examiner |
|---|---|---|
| THE HAGUE | 04-09-1987 | DE SCHEPPER H.P.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82